# EUROPEAN PATENT SPECIFICATION

(11) **EP 4 489 931 B1**
(45) Date of publication and mention of the grant of the patent: **19.11.2025**
(21) Application number: 23710722.2
(22) Date of filing: 09.03.2023
(51) Int. Cl.: B23K 26/03, B23K 26/06, B23K 26/082, B23K 26/08, B23K 26/14, B23K 26/38, B23K 26/40, B23K 26/12, B23K 103/04

(54) **METHOD AND APPARATUS FOR LASER CUTTING**
VERFAHREN UND VORRICHTUNG ZUM LASERSCHNEIDEN
PROCÉDÉ ET DISPOSITIF DE DÉCOUPE LASER

(30) Priority: 10.03.2022 EP 22161337
(43) Date of publication of application: 15.01.2025
(73) Proprietor: Bystronic Laser AG, 3362 Niederönz (CH)
(72) Inventor: SCHEIDIGER, Simon, 4900 Langenthal (CH); LUEDI, Andreas, 3400 Burgdorf (CH); BRÜGMANN, Michael, 3012 Bern (CH)
(74) Representative: Patentanwälte Geyer, Fehners & Partner mbB
(86) International application number: PCT/EP2023/056005
(87) International publication number: WO 2023/170201

(56) References cited:
- EP-A1- 3 838 471
- DE-A1- 102008 053 397
- DE-A1- 102018 129 407
- DE-U1- 202014 010 995

## Description

The invention relates to a method for laser cutting a metal workpiece, an apparatus for laser cutting a metal workpiece and a computer program product, see claims 1, 8 and 15.

When laser cutting a workpiece with an active process gas, such as oxygen, the metal material of the workpiece is burned in a process zone after it has been heated to the ignition temperature by the laser beam. This type of laser cutting is also called flame cutting. The reaction between oxygen and the material of the workpiece generates additional heat that supports the cutting process. This creates molten liquid material in the process zone of the workpiece, which has a low viscosity. When cutting with an inert process gas such as nitrogen or argon, the material of the workpiece is melted by the laser power. This type of laser cutting is also called fusion cutting.

When laser cutting workpieces, the aim is to obtain a high cutting quality. A high cutting quality can be recognised by cutting quality features of the workpieces, such as as little burr as possible on the underside of the workpieces and/or a low roughness of the cutting edges, e.g. few scores. From Schulz et al. (John Dowden (ed.) and W. Schulz (ed.), Theory of laser materials processing; Heat and mass transfer in modern technology. Springer, Gewerbestr. 11, 6330 Cham, Switzerland, 2017) it is known that the cutting quality depends on the Weber number W of the melt produced during laser cutting and the Weber number W depends on the surface tension. The higher the temperature of the melt, the lower the surface tension of the melt, see Morohoshi et al. ISIJ International, Vol. 51 (2011), No. 10, pp. 1580-1586. From a process light generated during laser cutting, the temperature of the molten metal in a kerf can be determined, as shown by Pinder T. and Goppold C., Understanding the Changing Mechanisms of Laser Beam Fusion Cutting by Applying Beam Oscillation, Based on Thermography Analysis, Appl. Sci. 2021, 11, 921. F.A. Halden and W.D. Kingery investigated the effect of various substances on the surface tension of liquid iron (F.A. Halden and W.D. Kingery Surface tension at elevated temperatures II, Effect of C, N, O, and S on Liquid Iron Surface Tension and Interfacial Energy with Al2O3, The Journal of Physical Chemistry, 59(6): 557-559, 1955).

EP3838471 A1 (describing the preamble of claims 1 and 8) is directed to a laser treatment method of a metallic work piece, comprising determining a time course of at least one characteristic parameter from acquired images, calculating at least one statistical parameter from the time course of the characteristic parameter; establishing a quality value from the statistical parameter; and controlling one or more process parameters. DE202014010995 U1 relates to a device for monitoring, more particularly controlling, a cutting process carried out on a workpiece, having an analysis apparatus designed to analyse the scanned region of interaction and work out at least one characteristic variable of the cutting process. DE102008053397 A1 discloses a method in which a maximum absorption of a laser beam at a predetermined workpiece thickness is obtained. DE102018129407 A1 relates to a method for cutting a workpiece by means of a laser beam, wherein at least one geometric property of the cutting gap is measured with the aid of an optical coherence tomography device.

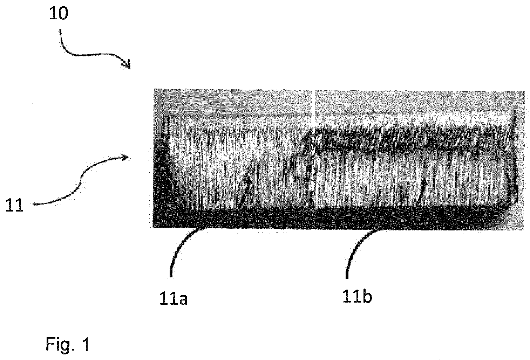

In order to achieve good cutting quality, different cutting parameters, i.e. process parameters of the method, are typically varied empirically and therefore with great effort, until a satisfactory cutting quality is found. Fig. 1 shows the cut edge of a cut workpiece 10 with acceptable cutting quality in the area 11a and poor cutting quality in the form of excessive roughness in the area 11b.

The object of the invention is to provide a method and an apparatus for laser cutting a metal workpiece, which allow high cutting quality in a simple manner.

This object is achieved by a method for laser cutting a metal workpiece according to claim 1, an apparatus for laser cutting a metal workpiece according to claim 8, and a computer program product according to claim 15.

One embodiment relates to a method for laser cutting a metal workpiece, including generating a processing laser beam with a laser source; directing the processing laser beam in a z-direction onto the workpiece to create a process zone in the workpiece; moving the processing laser beam and the process zone over the workpiece at a cutting speed to produce a kerf, wherein a molten layer is formed in the process zone; conducting a process gas to the process zone; and detecting a process light emitted by the process zone, which is generated in the workpiece by interaction with the processing laser beam, and determining the radiation temperature in the process zone using the detected process light. Radiation temperature values of the molten layer are determined in a spatially resolved manner from at least one observation direction at an angle of 0° to 80°, preferably 0° to 60°, more preferably 0° to 45°, to the z-direction and projected onto an xy-plane perpendicular to the observation direction; and at least one of the determined radiation temperature values is regulated to a setpoint radiation temperature value that corresponds to the respective radiation temperature value in the xy-plane and is spatially resolved in the xy-plane by adapting at least one process parameter of the method; wherein the at least one process parameter is selected from a power of the laser source; the cutting speed; a beam-shaping dynamic movement of the processing laser beam superimposed on the cutting movement; a position of a focal plane of the processing laser beam; and a chemical composition of the process gas directed to the process zone. In particular, any combination of at least two of the process parameters can be adapted.

The z-direction, which can also be understood as the propagation direction of the processing laser beam, can be oriented at an angle of 0° to 60° to a normal of the workpiece surface of the workpiece. When a planar workpiece surface of a workpiece is cut, the angle of the z-direction to the normal of the workpiece surface can be understood as an angle relative to a normal of the plane of the workpiece surface. If a curved or non-planar workpiece surface of a workpiece is cut, the angle of the z-direction to the normal of the workpiece surface can be understood as an angle relative to a normal of a tangential plane adjacent to the workpiece surface, in particular a tangential plane at the point of impact or in the area of impact of the processing laser beam on the workpiece surface. An angle of the z-direction to the normal of the workpiece surface deviating from 0° can be used; for example, for a bevel cut with the processing laser beam. The process gas can be directed onto the workpiece, in particular onto the process zone, as a process gas jet.

The radiation temperature values of the molten layer are determined in the method from at least one observation direction at an angle of 0° to 80°, preferably 0° to 60°, more preferably 0° to 45°, to the z-direction and projected onto an xy-plane perpendicular to the observation direction in a spatially resolved manner. The xy-plane can be understood as an observation plane, projection plane, object plane and/or focal plane. In particular, the xy-plane is a plane that is sharply imaged during detection, e.g. in a sensor of a detector device. In addition to points in the xy-plane, points around the xy-plane that lie within a depth of field/depth of focus of the detector device or the sensor can also be sharply imaged. For example, the spatial distribution of the radiation temperature values can be determined projected onto a surface plane of the workpiece observed perpendicularly with a temperature-calibrated camera as the xy-plane. In other examples, the spatial distribution of the radiation temperature values can be determined projected onto an xy-plane oriented at an angle to a surface plane of the workpiece, wherein the surface plane of the workpiece is observed with a temperature-calibrated camera at an angle to the perpendicular. The determined radiation temperature values can be thermal radiation temperature values, i.e. the thermal radiation emitted by the surface of the workpiece can be observed. If the determined, spatially resolved radiation temperature values are not in a desired range of values and/or in a desired spatial distribution, regulation to setpoint radiation temperature values spatially resolved in the xy-plane is carried out by adapting one or more of the process parameters. The desired range of values and/or the desired spatial distribution can be specified in each case by predetermined setpoint radiation temperature values of the molten layer, in particular as a function of the material of the workpiece and/or the thickness of the workpiece. The setpoint radiation temperature values can correspond to stored empirical values that are retrieved from a memory unit in the method and/or can be determined in a calibration method, e.g. before the method is carried out, and stored in the memory unit. The setpoint radiation temperature values correlate with a respective optimal cutting quality feature; for example, reduced burr formation on the underside of the workpiece or reduced scoring on the cut edge. If a plurality of cutting quality features are to be optimised at the same time, a combination of setpoint radiation temperature values is used, which brings about a balance between the respective cutting quality features.

The method enables the cutting quality to be optimised, in particular a reduction in burrs and/or scores on the cut workpiece. The cutting quality, in particular the formation of burrs, depends on the Weber number W. The higher the Weber number W, the less burr sticks to the workpiece. The Weber number W is proportional to the ratio of the density of the melt produced on the workpiece to the surface tension of the melt. By influencing the Weber number W, the adhesion of burrs and/or the roughness of the cut edge can therefore be positively influenced. However, the Weber number cannot be measured during laser cutting. Therefore, in the method of the embodiments, the density to surface tension ratio of the melt is optimised by measuring and regulating the radiation temperature of the molten layer. This is based in particular on the finding that both the density of the melt and the surface tension of the melt are temperature-dependent, wherein the temperature dependence of the surface tension is predominant. In the method of the embodiments, by measuring the radiation temperature of the molten layer in real time, i.e. during the laser cutting, the radiation temperature of the molten layer and thus the temperature of the melt is influenced and regulated in real time by varying process parameters. This changes the surface tension of the molten layer in real time, resulting in good cutting quality. Because the process parameters used for regulation relate in particular to parameters of the processing laser beam and/or the process gas and/or the cutting speed, the cutting quality is optimised in a simple manner and in real time. Since the process is based on the radiation temperature of the molten layer that is formed on the workpiece during laser cutting and contains material from the workpiece, the cutting quality can be optimised for a large number of materials in the workpiece and/or the molten layer, such as different metals or different alloys, e.g. stainless steel alloys.

The process light can be detected at an angle of 0° to the z-direction, coaxial to the processing laser beam. In this way, the process light can be observed particularly precisely and effectively from the direction of the processing laser beam.

The temperature of the molten layer can be derived from the determined radiation temperature values via the specific emissivity of the molten layer and/or via a dependence of the specific emissivity of the molten layer on the observation direction and/or by quotient formation of several intensities of the process light detected from the same observation direction at different wavelengths. The temperature of the molten layer can be determined by means of the specific emissivity, taking into account the material of the molten layer. Furthermore, the temperature can be derived from the dependency of the specific emissivity of the material of the molten layer on the observation direction by, for example, simultaneous determination of several radiation temperature values of the molten layer from several different observation directions. In addition, by detecting the process light in one observation direction with, for example, two different wavelengths, the temperature of the molten layer can be derived by forming the quotient of the two detected intensities. The latter enables the temperature of the molten layer to be determined without taking into account the specific emissivity, in particular if the emissivity of the material in question is only wavelength-dependent to a small extent. In this way, the temperature is not determined based on the "brightness" but based on the "colour" of the process light and is derived as an average temperature.

The setpoint radiation temperature value can be understood to mean a setpoint radiation temperature value of the molten layer, which is specified in particular as a function of the material of the workpiece and/or the thickness of the workpiece. The at least one setpoint radiation temperature value can correspond to at least one optimised or optimal cutting quality feature. The at least one setpoint radiation temperature value can correspond to at least one predetermined optimised or optimal cutting quality feature. In all embodiments, optimized cutting quality features or optimal cutting quality features can be understood as cutting quality features which are or were determined to be optimal, e.g. during or before the method for laser cutting. In this way, at least one optimised cutting quality feature can be obtained by regulating the radiation temperature values in the method. Furthermore, a Weber number of the molten layer and/or a surface tension of the molten layer and/or a ratio of the surface tension to the density of the molten layer can be derived from the at least one determined radiation temperature value and adjusted by regulating the radiation temperature value in accordance with the optimised or optimal cutting quality feature. The Weber number W is proportional to the ratio of the density of the melt produced on the workpiece to the surface tension of the melt. By influencing the Weber number W of the molten layer and/or the surface tension of the molten layer and/or the ratio of the surface tension to the density of the molten layer, the burr formation on the workpiece and/or the roughness of the cut edge can therefore be positively influenced. The cutting quality feature, in particular the at least one optimised or optimal cutting quality feature, may be selected from drop formation, burr drips, burr beads, burrs on the underside of the cut workpiece, a burr height on the underside of the cut workpiece, scores on a cut edge of the cut workpiece, a score frequency of the scores on the cut edge and any combination thereof.

The beam-shaping dynamic movement of the processing laser beam can take place in and/or relative to the z-direction. The beam-shaping dynamic movement of the processing laser beam can be set by means of a variation in a movement amplitude of the processing laser beam, in particular in the range of at least ±0.5 mm, preferably at least ±1 mm, and/or a variation in a movement frequency of the processing laser beam, in particular in the range of 0.1 Hz to 17 kHz, preferably 10 Hz to 15 kHz, more preferably 100 Hz to 4 kHz. In particular, the beam-shaping dynamic movement of the processing laser beam can be adapted as a variation of at least one amplitude, at least one frequency and/or at least one phase shift of the processing laser beam. As a result, a dynamic variation of the shape of the processing laser beam can be generated with a focal point oscillation, which shapes the processing laser beam through a spatio-temporal distribution of the laser energy over the workpiece surface and/or over a focal plane of the processing laser beam. In particular, the frequency and/or the amplitude can be varied in directions relative to the z-direction and/or in the z-direction. The directions relative to the z-direction can be two mutually perpendicular m-directions and n-directions, which in turn run perpendicular to the z-direction. For example, the frequency and/or the amplitude can be varied in the m-direction, n-direction and/or z-direction, and/or the phase shift can be in the n-direction relative to the m-direction, preferably in the n-direction and z-direction relative to the m-direction. This enables a targeted and exact regulation of the radiation temperature values to a desired temperature value range and/or to a desired spatial distribution thereof. In further examples, the movement frequency of the processing laser beam can be selected in the range from 0.1 to 10 Hz. As a result, the processing laser beam and the process gas beam, in particular their central axes, can be shifted relative to one another and/or the processing laser beam can be de-adjusted. This makes it possible for the process gas jet to hit the workpiece in a targeted manner at a point and/or in an area where a radiation temperature value is or is to be measured.

The chemical composition of the process gas can be set by admixing and/or metering at least one gas that contains at least one element or molecule that is surface-active for the molten layer, in particular an oxygen-containing gas, a nitrogen-containing gas, a carbon-containing gas and/or a sulphur-containing gas. In this way, the surface tension of the molten layer can be favourably influenced and thus undesirable droplet formation, burr formation and/or score formation can be avoided or at least reduced.

The at least one setpoint radiation temperature value can be determined, in particular can be predetermined, by calibrating determined radiation temperature values of the molten layer to at least one optimal cutting quality feature. This makes it possible to determine, in particular predetermine, setpoint radiation temperature values for regulating the radiation temperature values, which correlate with one or more optimal cutting quality features, for example reduced burr formation on the underside of the workpiece or reduced scoring on the cut edge.

The determined radiation temperature values can be matched to a geometry of the kerf. For example, a three-dimensional geometry of the process zone that is predefined or estimated as a model can be projected over the recorded process light. In this way, the determined radiation temperature values can be correlated with the locations of the process zone and/or the kerf, e.g. ridges/droplets of the melt on the underside of the cut workpiece.

A further embodiment relates to an apparatus for laser cutting a metal workpiece, in particular for laser cutting a metal workpiece using a method according to any one of the preceding embodiments and modifications thereof. The device contains a) a cutting head with an exit aperture for the processing laser beam and for a process gas; and a light beam optics for directing the processing laser beam in a z-direction through the exit aperture and for focusing and/or for beam-shaping dynamic movement of the processing laser beam; b) a laser source for generating the processing laser beam; c) a movement device for moving the cutting head at a cutting speed relative to the workpiece; d) at least one process gas source for the process gas; and e) a detector device for detecting a process light emitted by the process zone, which is generated in the workpiece by interaction with the processing laser beam, and for determining the radiation temperature in the process zone using the detected process light. The detector device is designed to measure and project radiation temperature values of a molten layer in the process zone from at least one observation direction (b) at an angle of 0° to 80°, preferably 0° to 60°, more preferably 0° to 45°, to the z-direction to determine an xy-plane perpendicular to the direction of observation with spatial resolution. The device also has f) a regulating device for regulating at least one of the determined radiation temperature values to a setpoint radiation temperature value that corresponds to the respective radiation temperature value in the xy-plane and is spatially resolved in the xy-plane by adapting at least one process parameter of the method. The at least one process parameter is selected from the power of the laser source; the cutting speed, a beam-shaping dynamic movement of the processing laser beam superimposed on the cutting movement; a position of a focal plane of the processing laser beam; and a chemical composition of the process gas. In particular, the regulating device can be designed to adapt any combination of at least two of the process parameters. The process gas source and/or the exit aperture can be designed to guide the process gas as a process gas jet onto the workpiece, in particular onto the process zone.

The detector device can be designed to record a spatially resolved image with a pixel distribution and radiation temperature values integrated therein. The detector device and/or the light beam optics can be designed and/or positioned to detect the process light at an angle of 0° to the z-direction coaxially to the processing laser beam. The detector device can further be designed to derive the temperature, in particular at least one temperature, of the molten layer from the determined radiation temperature values via the specific emissivity of the molten layer and/or via a dependence of the specific emissivity of the molten layer on the observation direction and/or by quotient formation of several intensities of the process light detected from the same observation direction at different wavelengths. The detector device can contain a quotient pyrometer or be designed as a quotient pyrometer.

The at least one setpoint radiation temperature value can correspond to at least one optimised or optimal cutting quality feature. The at least one setpoint radiation temperature value can correspond to at least one predetermined optimised or optimal cutting quality feature. A memory unit can be provided, which is connected to the regulating device in a data-conducting manner and/or is contained therein and contains the at least one setpoint radiation temperature value. The regulating device can be designed to derive a Weber number, in particular at least one Weber number, of the molten layer and/or a surface tension, in particular at least one surface tension, of the molten layer and/or a ratio, in particular at least one ratio, of the surface tension to the density of the molten layer from the at least one determined radiation temperature value and to adjust it in accordance with the at least one optimised or optimal cutting quality feature by regulating the radiation temperature value. The cutting quality feature, in particular the at least one optimised or optimal cutting quality feature, may be selected from drops, burr drips, burr beads, burrs on the underside of the cut workpiece, a burr height on the underside of the cut workpiece, scores on a cut edge of the cut workpiece, a score frequency of the scores on the cut edge and any combination thereof.

The light beam optics can include a movable optical element which is movable by an element movement unit. The regulating device can be designed to adjust the beam-shaping dynamic movement of the processing laser beam by means of a variation in a movement amplitude of the processing laser beam moved with the movable optical element, in particular in the range of at least ±0.5 mm, preferably at least ±1 mm, and/or a variation in a movement frequency of the processing laser beam moved with the movable optical element, in particular in the range from 0.1 Hz to 17 kHz, preferably 10 Hz to 15 kHz, more preferably 100 Hz to 4 kHz. In particular, the regulating device can be designed to bring about an adaptation of the beam-shaping dynamic movement of the processing laser beam by varying at least one amplitude, at least one frequency and/or at least one phase shift of the processing laser beam. As a result, a dynamic variation of the shape of the processing laser beam can be generated with a focal point oscillation, which shapes the processing laser beam through a spatio-temporal distribution of the laser energy over the workpiece surface and/or over a focal plane of the processing laser beam. In particular, the regulating device can be designed to vary the frequency and/or the amplitude in the z-direction and/or in directions relative to the z-direction. The directions relative to the z-direction can be two mutually perpendicular m-directions and n-directions, which in turn run perpendicular to the z-direction. For example, the regulating device can be designed to vary the frequency and/or the amplitude in the m-direction, n-direction and/or z-direction, and/or the phase shift in the n-direction relative to the m-direction, preferably in the n-direction and z-direction relative to the m-direction.

This enables a targeted and exact regulation of the radiation temperature values to a desired temperature value range and/or to a desired spatial distribution thereof.

The regulating device can be connected in a data-conducting manner to at least one element selected from the laser source, the movement device, the element movement unit of the light beam optics for generating the beam-shaping dynamic movement of the processing laser beam, the process gas source, in particular a gas metering device of the process gas source, and the detector device. The light beam optics can have at least one immovable optical element and/or at least one actuator as the element moving unit and at least one optical element movable with the actuator.

The at least one process gas source can provide at least one gas that contains at least one element or molecule that is surface-active for the molten layer, in particular an oxygen-containing gas, a nitrogen-containing gas, a carbon-containing gas and/or a sulphur-containing gas. The regulating device can be designed to adjust the chemical composition of the process gas by adding and/or metering the at least one gas by means of the process gas source, in particular by means of the gas metering device of the process gas source.

The regulating device can be designed to determine, in particular predetermine, the at least one setpoint radiation temperature value by calibrating determined radiation temperature values of the molten layer to at least one optimal cutting quality feature. The regulating device can also be designed to match the determined radiation temperature values to a geometry of the kerf.

One embodiment relates to a computer program product, containing one or more program modules that cause the apparatus according to any one of the preceding embodiments and modifications thereof to carry out the steps of the method according to any one of the preceding embodiments and modifications thereof, in particular when the program modules are loaded into a memory unit of the apparatus.

In the following, the invention will be explained in more detail on the basis of exemplary embodiments with reference to the accompanying drawings, which likewise disclose features that are essential to the invention. These exemplary embodiments are used for illustration purposes only and are not to be construed as limiting. For example, a description of an exemplary embodiment with a large number of elements or components should not be interpreted to the effect that all of these elements or components are necessary for implementation. Rather, other exemplary embodiments can also contain alternative elements and components, fewer elements or components, or additional elements or components. Elements or components of different exemplary embodiments can be combined with one another, unless otherwise indicated. Modifications and variations which are described for one of the exemplary embodiments can also be applied to other exemplary embodiments. To avoid repetition, elements that are the same or that correspond to one another are denoted by the same reference signs in different figures and are not explained more than once. In the drawings:
- Fig. 1: shows a photograph of a cut workpiece with acceptable and insufficient cutting quality;
- Fig. 2a: schematically shows an exemplary embodiment of a method for laser cutting a metal workpiece;
- Figs. 2b to 2d: schematically show an exemplary embodiment of an apparatus for laser cutting a metal workpiece;
- Fig. 2e: schematically shows a beam-shaping dynamic movement of a processing laser beam;
- Fig. 3a: shows an exemplary image of a process zone produced with the exemplary embodiment in Figs. 2a to 2d, with the associated temperature scale;
- Figs. 3b to 3c: show exemplary embodiments in which a processing laser beam is irradiated at an angle greater than 0° to the surface of a workpiece, also referred to as the workpiece surface; and
- Figs. 4 to 7: show exemplary embodiments of the apparatus for laser cutting a metal workpiece.

The terms "apparatus for laser cutting a metal workpiece" and "apparatus for laser cutting", as well as "laser cutting apparatus" are used synonymously here. The terms "method for laser cutting a metal workpiece" and "method for laser cutting" are used synonymously. The material of the metal workpiece contains at least one metal; for example, in a metal alloy.

A kerf produced by laser cutting with the following exemplary embodiments has a cutting front and at least one cut edge. In all embodiments, the laser source for generating a processing laser beam can be designed such that a continuous and/or discontinuous, in particular pulsed, processing laser beam is provided. In embodiments, the method for laser cutting is controlled with a control device. In embodiments, the apparatus for laser cutting includes a control device with which the apparatus for laser cutting and its controllable components are controlled and/or regulated. In the method for laser cutting, the processing laser beam and/or the cutting head is/are moved over the workpiece in the cutting direction. The apparatus for laser cutting contains a movement device with which the cutting head and/or the processing laser beam can be moved in the cutting direction at a cutting speed relative to the workpiece, i.e. over the workpiece.

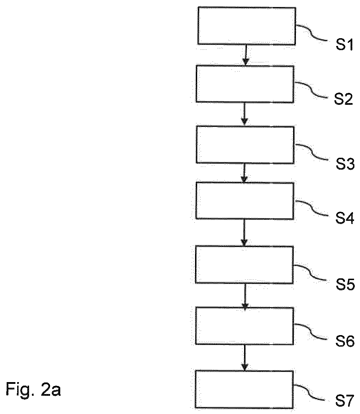

Figs. 2a to 2e schematically show an exemplary embodiment that relates to a method for laser cutting with steps S1 to S7 and a laser cutting apparatus 100 with a cutting head 110.

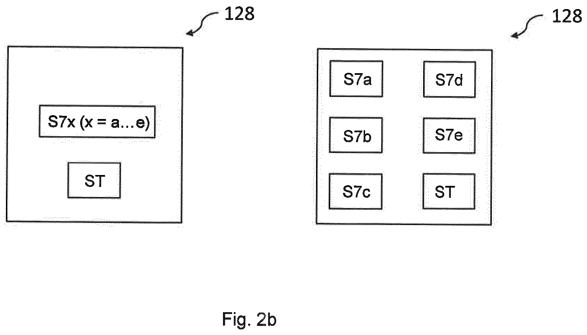

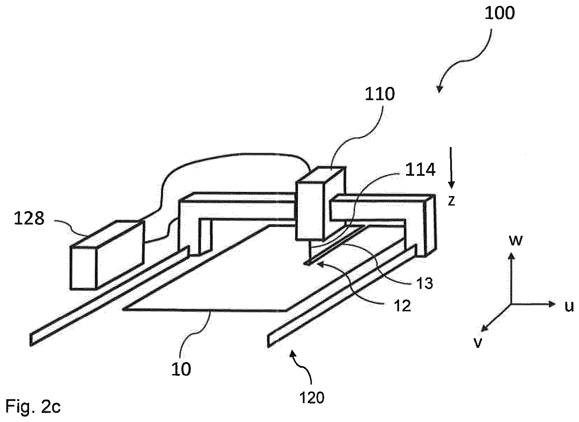

The laser cutting apparatus 100, also referred to below as the apparatus 100, is shown in perspective in Fig. 2c. With the cutting head 110, a processing laser beam 114 can be directed in a z-direction, which in the present case corresponds to the direction of propagation of the processing laser beam, onto a metal workpiece 10; for example, a metal sheet made of a high-grade steel alloy. The workpiece 10 has a flat workpiece surface defined by v-directions and u-directions. The perpendicular to the workpiece surface runs in a w-direction. The laser cutting apparatus 100 includes a movement device 120, with which the cutting head 110 and thus the laser beam 114 guided therein can be moved in the cutting direction in the v-direction and/or the u-direction relative to the workpiece 10. In the present example, the movement device 120 contains a bridge, on which the cutting head 110 is arranged such that it can be displaced in the u-direction, and a carriage on which the bridge can be moved in the v-direction. With the movement device 120, the cutting head 110 can also be moved perpendicular to the workpiece 10, i.e. in the w-direction. The laser cutting device 100 has a regulating device 128 that is connected to the movement device 120 and the cutting head 110 in a wired or wireless data-conducting manner. In the present example, the regulating device 128 is a central control device of the laser cutting apparatus 100. Alternatively, the regulating device 128 can be contained in or connected to a central control device of the device 100. As Fig. 2b illustrates, the regulating device 128 is designed to regulate and/or adapt at least one process parameter S7a to S7e in the method for laser cutting to be carried out with the laser cutting apparatus 100.

Fig. 2b shows on the left an embodiment of the regulating device 128 that is designed to adapt one or more of the process parameters S7x, where x = a to e, for exemplary embodiments in which only one or a selection of the process parameters is required for the control. Fig. 2b shows on the right an embodiment of the regulating device 128 that is designed to adapt each of the process parameters S7x, where x = a to e, for exemplary embodiments in which each of the process parameters S7a to S7e can be used for the regulation. Furthermore, spatially resolved setpoint radiation temperature values ST for the method to be carried out with the laser cutting apparatus 100 are stored in the regulating device 128 in an xy-plane, for example an observation plane. The regulating device 128 can contain a memory unit 129 for this purpose.

The setpoint radiation temperature values ST can correspond to empirical values of radiation temperature values for generating optimal cutting qualities and/or can be determined and stored in a calibration method, e.g. before the method is carried out, using cut workpieces 10 with optimal cutting quality. The setpoint radiation temperature values ST correlate with one or more optimal cutting quality features, e.g. reduced burr formation on the underside of the workpiece or reduced scoring on the cut edge.

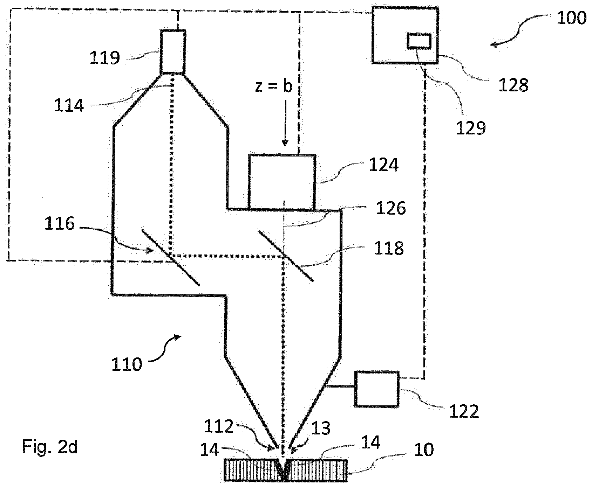

Fig. 2d shows further components of the laser cutting apparatus 100 and the cutting head 110 schematically in a cross-sectional view. The cutting head 110 has an exit aperture 112 for the processing laser beam 114. The laser cutting apparatus 100 has a laser source 119, for example a fibre laser, for generating the processing laser beam 114, which is coupled to the cutting head 110. Alternatively, the laser source 119 can be connected to the cutting head 110 via a transport fibre and/or at another location. The laser source 119 is designed to generate the processing laser beam 114 with a wavelength of at least 800 nm and power of at least 1 kW.

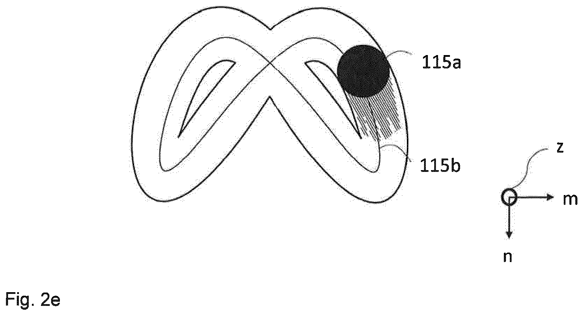

The cutting head 110 includes light beam optics 116, 118. In the present example, the light beam optics contains a movable optical element 116 and a stationary optical element 118. The movable optical element 116 has a reflective surface that is reflective to the processing laser beam 114. The reflective surface of the optical element 116 can, for example, be moved dynamically at a frequency of 10 Hz to 15 kHz relative to the impinging processing laser beam 114 in order to achieve a beam-shaping dynamic movement, also referred to as DBS (dynamic beam shaping), of the processing laser beam 114 relative to its direction of propagation, for example, i.e. to the z-axis. An example of this is illustrated schematically in Fig. 2e. This figure shows a beam-shaping dynamic movement of a laser spot 115a of the processing laser beam 114, which is moved dynamically on a loop-shaped central movement trajectory 115b in an mn-plane perpendicular to the z-direction. Alternatively or additionally, the reflective surface of the optical element 116 can be deformed, for example, such that the position of the focal plane of the processing laser beam 114 is varied along the z-direction relative to the workpiece 10; in the present example, a distance and/or an inclination to the uv-plane of the workpiece surface, for example. The fixed optical element 118 is a dichroic mirror that is reflective to the processing laser beam 114 and is at least partially transparent to the process light 126. The light beam optics may include other optical elements such as a collimating lens and/or a focusing lens (neither shown). The optical elements 116 and 118 of the light beam optics are arranged and aligned in the beam path of the processing laser beam 114 in such a way that the processing laser beam 114 is guided, in particular deflected, in the z-direction through the exit aperture 112. The optical element 118 of the light beam optics is also arranged in the beam path of the process light 126.

A detector device 124 and at least one process gas source 122 are also coupled to the cutting head 110.

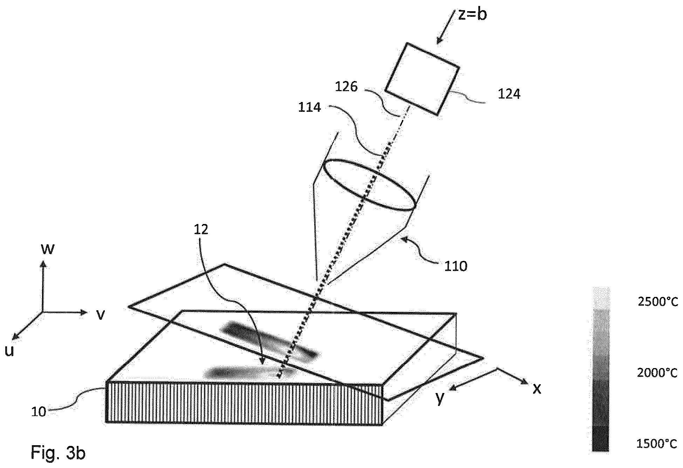

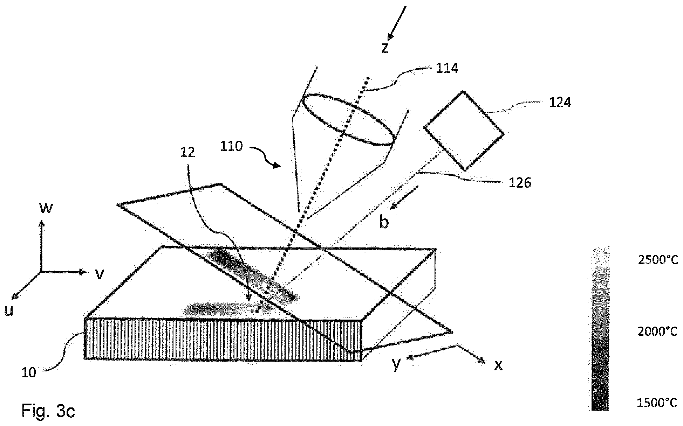

The detector device 124 is designed as a camera containing a radiation sensor that is sensitive to light in a wavelength range kl of 1000 nm, for example in the visible wavelength range and/or in the near infrared range. A monochromatic camera with a CMOS or CCD chip or with a diode array can be used as a radiation sensor. The radiation sensor of the detector device 124 is temperature-calibrated. This means that the intensity of the process light, which is preferably detected in a narrow spectral range, can be assigned to a radiation temperature. Heat radiation, also called thermal radiation, increases proportionally with the physical temperature of a body. The process light 126 observed with the detector device 124 essentially corresponds to thermal radiation. If a black body with an emissivity of 1 is observed, the detected radiation temperature corresponds to the physical temperature. The detector device is thus designed to record a spatially resolved image with a pixel distribution and radiation temperature values integrated therein. The detector device 124 is therefore designed to detect a process light 126 generated in the workpiece 10 by interaction with the processing laser beam 114 and to determine radiation temperature values therefrom. In the present case, the process light 126 is thermal radiation, i.e. heat radiation, from a molten layer 14 of a liquid metal melt that is produced on the workpiece in the process zone during laser cutting and contains workpiece material. In this example, the detector device 124 is coupled to the cutting head 110 in a position that makes it possible to detect the process light 126 emitted by the workpiece 10 through the exit aperture 112 in a viewing direction b coaxially with the processing laser beam 114 impinging on the workpiece 10. The observation direction b corresponds to the z-direction, as illustrated in Figs. 2d and 3b. In alternative examples, the detector device 124 is provided in the apparatus 100 and/or on or in the cutting head 110 off-axis to the processing laser beam 114 in a position that makes it possible to detect the emitted process light 126 in the observation direction b at an angle of greater than 0° to e.g. 10° to the z-direction, as illustrated e.g. in Fig. 3c.

The process gas source 122 provides a process gas and is coupled to the cutting head 110 in a fluid-conducting manner, as illustrated in Fig. 2d. The process gas can include a gas that contains a surface-active element or molecule for the molten layer 14, depending on the material of the molten layer 14. It can also contain a gas that releases an element and/or molecule that is surface-active for the molten layer 14 in the event of an interaction, e.g. a reaction, with the material of the surface of the molten layer 14 and/or in the event of an interaction with the processing laser beam 114. The surface-active element and/or molecule contained or produced interacts with the surface of the molten layer 14 and/or with the material of the molten layer 14 and changes its surface tension. For example, the process gas contains N₂, O₂, CO, CO₂ and/or a sulphur-containing gas.

The regulating device 128 is connected to at least one component of the laser cutting apparatus 100 selected from the laser source 119, the movement device 120, the movable optical element 116 of the light beam optics, the process gas source 122 and the detector device 124 in a wireless and/or wired data-conducting manner, which is shown in Fig. 2d with dashed connecting lines. The components that are connected to the regulating device 128 in a data-conducting manner are designed to be controllable.

A method for laser cutting is carried out with the laser cutting apparatus 100, as shown schematically in Fig. 2a. During operation of the laser cutting apparatus 100, the process gas is conducted into the cutting head 110 with the process gas source 122 in a step S4 and is directed through the exit aperture 112 onto the metal workpiece 10. The processing laser beam 114 is generated with the laser source 119 in a step S1. The light beam optics 116, 118 of the cutting head 110 directs the processing laser beam 114 in a z-direction through the exit aperture 112 onto the workpiece 10, wherein a process zone 12 is produced in the workpiece. This happens in a step S2. The processing laser beam 114 and the process zone 12 are moved over the workpiece 10 at a cutting speed in a step S3 with the movement device 120. A kerf 13 is produced, wherein a molten layer 14 of workpiece material is produced in the process zone 12. In this case, the process light 126 is generated by an interaction with the processing laser beam 114 and is at least partially emitted from the process zone 12 through the exit aperture 112 into the cutting head 110. The process light 126 passes through the dichroic mirror 118 into the detector device 124 and is detected there in a step S5.

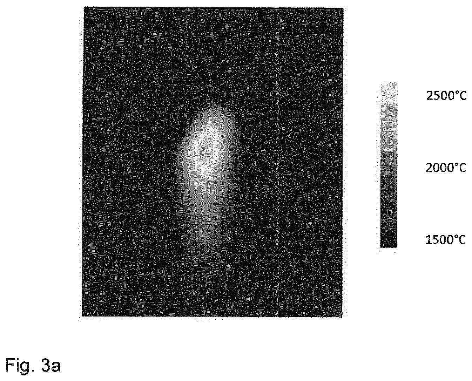

In a step S6, the detector device 124 is used to determine the radiation temperature in the process zone 12 using the detected process light 126. An exemplary image of the process zone 12 with the associated temperature scale obtained with the detector device 124 and recorded coaxially to the processing laser beam 114 is reproduced in Fig. 3a. Radiation temperature values of the molten layer 14 are determined in a spatially resolved manner from an observation direction b at an angle of 0° to the z-direction and projected onto the xy-plane perpendicular to the observation direction b. This applies to variants of the method in which the processing laser beam 114 is irradiated essentially perpendicularly, as shown in Figs. 2c and 2d, or at a different angle to the surface of the workpiece 10, as shown in Fig. 3b, and the observation direction b runs coaxially to the irradiated processing laser beam 114. The detector device 124 is arranged in such a way and/or the light beam optics 116, 118 is designed in such a way that the z-direction and the observation direction b coincide. In other examples of the method, as illustrated in Fig. 3c, radiation temperature values of the molten layer 14 are determined in a spatially resolved manner from an observation direction b at an angle greater than 0° to 80° to the z-direction and projected onto the xy-plane perpendicular to the observation direction b. The detector device 124 is arranged in such a way and/or the light beam optics 116, 118 is designed in such a way that the z-direction and the observation direction b enclose an angle greater than 0°. The xy-plane can be understood as the observation plane.

In another example (not shown), the examples of Figs. 3b and 3c are combined. Radiation temperature values of the molten layer 14 are determined spatially resolved from two observation directions b at an angle of 0° and at an angle greater than 0° to 80° to the z-direction and each projected onto an xy-plane perpendicular to the respective observation direction b. For this purpose, two detector devices 124 are provided in corresponding positions in and/or on the cutting head 110 and/or the light beam optics 116, 118 is designed such that in the case of one detector device 124, the z-direction and the observation direction b coincide and, in the case of the other detector device 124, the z-direction and the observation direction b enclose an angle greater than 0°. For example, the other detector device 124 is provided next to or on the outside of the cutting head 110. This exemplary embodiment enables the temperature to be derived from a dependency of the specific emissivity of the material of the molten layer on the observation direction by determining several radiation temperature values of the molten layer from several different observation directions.

In a step S7 of the method, control is carried out using the regulating device 128. If the determined, spatially resolved radiation temperature values are not in a desired range of values and/or in a desired spatial distribution, which are specified by setpoint radiation temperature values ST spatially resolved in the xy-plane and stored in the regulating device 128, an adjustment to the setpoint radiation temperature values ST is carried out by adjusting one or more of the process parameters S7a to S7e. At least one of the determined radiation temperature values is regulated by means of the regulating device 128 to the setpoint radiation temperature value ST which corresponds to the respective radiation temperature value in the xy-plane and is spatially resolved in the xy-plane. This is achieved by adjusting at least one of the process parameters S7a to S7e of the method for laser cutting. The process parameters S7a to S7e are the power S7a of the laser source 119, the cutting speed S7b, a beam-shaping dynamic movement S7c of the processing laser beam 114 that is generated with the movable optical element 116 and is superimposed on the cutting movement, a position S7d of a focal plane of the processing laser beam 144 and a chemical composition S7e of the process gas conducted to the process zone 12. In other words, one or more of the process parameters mentioned is varied continuously or discontinuously by means of the regulating device 128 during the laser cutting until the determined radiation temperature values are in the desired value range and/or in the desired spatial distribution.

Tolerance ranges can be taken into account for a deviation of the determined, spatially resolved radiation temperature values from the desired value range and/or the desired spatial distribution. If, for example, maxima of the radiation temperature values are determined by the detector device 124 during the observation, a tolerance range of 3% can be taken into account. If, for example, one or more radiation temperature values integrated over a surface are determined, a tolerance range of 2% can be specified. In addition, tolerance ranges depending on the power of the laser source 119 can be taken into account. The power S7a can be the peak power and/or the average power of the laser source 119.

The sequence of the steps S1 to S7 shown in Fig. 2a can be varied; for example, several steps can be carried out simultaneously.

Fig. 3a shows an example of a process light 126 generated during laser cutting of a high-grade steel alloy and recorded with the detector device 124 coaxially to the processing laser beam 114, with radiation temperature values between 1500 and 2500°C. If the spatially resolved radiation temperature values measured with the detector device 124 are not in the desired range and/or in a desired spatial distribution, these are influenced by the processing laser and/or the process gas. For example, the following procedures are possible individually or in combination in order to optimise the cutting quality: a) The radiation temperature values desired in the method for optimal cutting quality are set by varying the power of the laser source 119 and/or the cutting speed. This can be implemented both with a pulsed or a continuously generated processing laser beam 114. b) The processing laser beam 114 is specifically shaped using dynamic beam shaping (DBS) and/or the position of the focal plane of the processing laser beam 114 is shifted such that the radiation temperature and/or its spatial distribution is optimal. c) A surface-active gas for the molten layer is added to the process gas and/or the proportion of a surface-active gas in the process gas is adjusted. The surface-active gas interacts and/or reacts with the metal melt in the molten layer 14 and reduces its surface tension. The surface tension, in turn, can be determined by means of the temperature of the melt. By regulating the composition of the process gas, the melt can be kept at the optimum temperature and thus at the optimum surface tension.

The method for laser cutting enables the cutting quality to be optimised by measuring the temperature of the molten layer in real time during laser cutting and regulating the temperature in real time using process parameters. In particular, process parameters are used that influence the processing laser beam and/or the process gas. Thus, the surface tension of the molten layer can be changed by measuring the temperature of the molten layer in a regulation circuit such that a good cutting quality results. In this way, the temperature of the molten layer and thus the melting of the material of the workpiece is used to improve the cutting quality, in particular to reduce the formation of burrs and the roughness on the cutting edge of the cut workpiece.

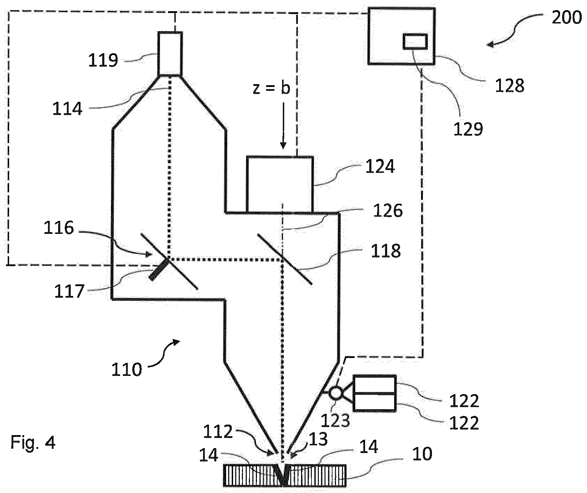

A laser cutting apparatus 200 with exemplary configurations of the movable optical element 116 of the light beam optics and the process gas source 122 is shown schematically in Fig. 4 as a further example.

In the configuration of the laser cutting apparatus 200 in Fig. 4, the movable optical element 116 has at least one element movement unit 117; for example, at least one actuator for generating the beam-shaping dynamic movement of the processing laser beam. The movable optical element 116 contains at least one reflective surface that can be moved dynamically with the element movement unit 117 at a frequency of 10 Hz to 15 kHz relative to the impinging processing laser beam 114 in order to produce a beam-shaping dynamic movement, also referred to as DBS (dynamic beam shaping) of the processing laser beam 114, e.g. perpendicular to its direction of propagation, i.e. the z-direction. The movable optical element 116 can be designed, for example, as an at least partially movable mirror. The mirror 116 can, for example, be designed to be dynamically orientable, for example tiltable. Alternatively, the mirror 116 may be part of a galvanometer scanner. Furthermore, the mirror 116 is rotatable about an axis that forms an angle with a reflecting plane of the mirror, and is orientable such that the angle is greater than or less than 90°. The mirror 116 can be embodied as a segment mirror with a plurality of mirror segments that can each be dynamically oriented. The reflective surface of the optical element 116 can be dynamically deformable; for example, the optical element 116 can be a deformable mirror with at least one piezo actuator, a bimorph deformable mirror, a MEMS-based or MOEMS-based deformable mirror and/or a voice coil-based deformable mirror. In another example, the movable optical element 116 is an optical unit, in particular a refractive optical unit and/or an off-axis parabolic mirror, which is at least partially dynamically movable by means of at least the element movement unit 117, in particular a dynamically movable laser fibre end unit. The element movement unit 117 is controllable and may have at least one element selected from a piezo actuator, an electric motor, a pneumatic motor, an eccentric, an oscillating electromagnetic field generating device, a MEMS oscillator, a voice coil, an electrostatically movable actuator, a plurality thereof, and/or a combination thereof. In the present example, the regulating device 128 is connected to the element movement unit 117 in a data-conducting manner. The memory unit 129 of the regulating device 128 is shown in Fig. 4.

In the example of Fig. 4 a plurality of process gas sources 122 is provided in order to provide a mixture of a plurality of gases as the process gas in the cutting head 110. In this case, the process gas sources 122 are connected in a fluid-conducting manner to the cutting head 110 via a gas metering device 123, e.g. a mixing valve. The regulating device 128 is connected to the gas metering device 123 in a data-conducting manner and adjusts them to regulate the chemical composition of the process gas. For example, for fusion cutting (for example of a stainless steel alloy workpiece) a gas mixture of nitrogen N₂ and oxygen O₂ is provided, wherein the main component of the process gas is nitrogen and the proportion of oxygen as a surface-active molecule is varied to adjust the surface tension of the molten layer 14. In another example, a gas mixture of oxygen O₂ and carbon dioxide CO₂ is provided for flame cutting, for example, a workpiece made of a stainless steel alloy, wherein the main component of the process gas is oxygen and the proportion of carbon dioxide as a surface-active molecule or a molecule containing surface-active elements is varied to adjust the surface tension of the molten layer 14.

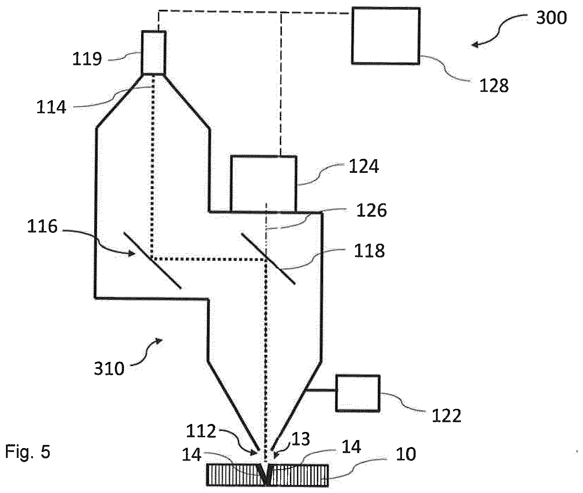

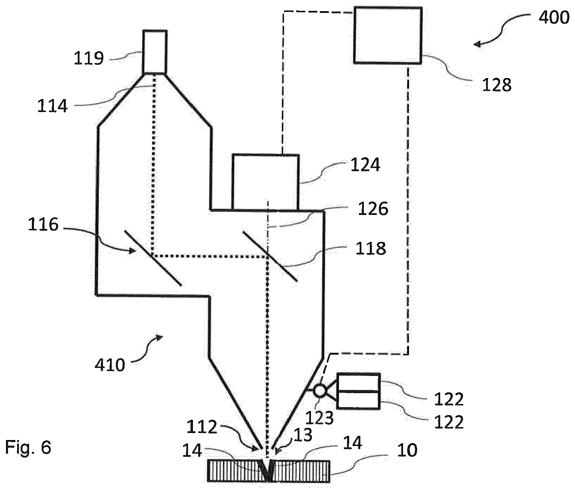

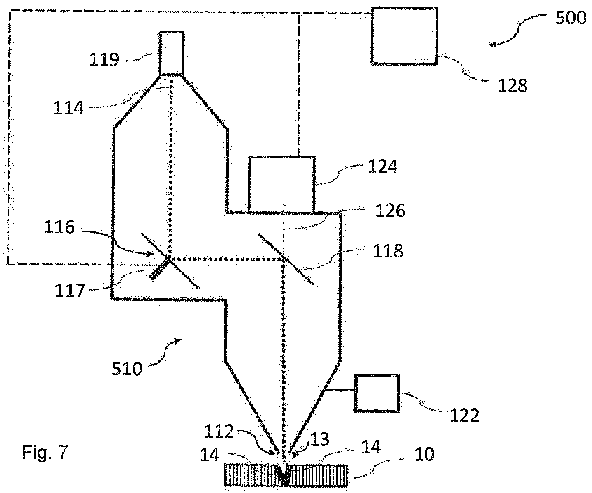

In other examples, the laser cutting apparatus 100 is designed such that, for the regulation, only one or any combination of the process parameters S7a to S7e in step S7 of the method is/are varied by means of the regulating device 128 continuously or discontinuously during laser cutting until the determined radiation temperature values are each in the desired range of values and/or in the desired local distribution in order to obtain an optimum cutting quality. In such examples, the regulating device 128 is therefore only connected to the component(s) to be controlled, which is used for the regulation of the laser cutting apparatus 100 in question. According to one example, the regulating device 128 of the apparatus 100 is for the regulation connected in a data-conducting manner only to the detector device 124 and the movement device 120 in order to adapt the cutting speed S7b. In another example of a laser cutting apparatus 300, shown schematically in Fig. 5, the regulating device 128 is for the regulation connected to the detector device 124 and the laser source 119 in a data-conducting manner to adjust the power S7a of the laser source 119. In a further example of a laser cutting apparatus 400, which is shown schematically in Fig. 6, the regulating device 128 is for the regulation connected to the detector device 124 and the process gas source 122 in a data-conducting manner, in particular the gas metering device 123, in order to adjust the chemical composition S7e of the process gas directed to the process zone 12. According to an example of a laser cutting apparatus 500, which is shown schematically in Fig. 7, the regulating device 128 is for the regulation connected to the detector device 124 and the movable optical element 116 of the light beam optics and/or to its element movement unit 117 in a data-conducting manner in order to generate a beam-shaping dynamic movement S7c of the processing laser beam 114 superimposed on the cutting movement for the regulation with the movable optical element 116 and/or to adjust the position S7d of the focal plane of the processing laser beam 144 relative to the workpiece 10. The examples mentioned with a regulation of a reduced number of process parameters can be combined as desired. In Figures 5 to 7, the regulating device 128 is shown as a unit that is provided separately from the central control device (not shown) of the laser cutting apparatus 300 to 500. In these cases, the regulating device 128 can be connected to the central control device in a data-conducting manner.

### List of reference signs

- 10: Workpiece
- 11: Cut edge
- 11a: Area
- 11b: Area
- 12: Process zone
- 13: Kerf
- 14: Molten layer
- 100: Apparatus for laser cutting a metal workpiece; laser cutting apparatus
- 110: Cutting head
- 112: Exit aperture
- 114: Processing laser beam
- 115a: Laser spot
- 115b: Central movement trajectory
- 116: Light beam optics, optical element
- 117: Element movement unit
- 118: Light beam optics, optical element
- 119: Laser source
- 120: Movement device
- 122: Process gas source
- 123: Gas metering device
- 124: Detector device
- 126: Process light
- 128: Regulating device
- 129: Memory unit
- 200: Apparatus for laser cutting a metal workpiece; laser cutting apparatus
- 300: Apparatus for laser cutting a metal workpiece; laser cutting apparatus
- 400: Apparatus for laser cutting a metal workpiece; laser cutting apparatus
- 500: Apparatus for laser cutting a metal workpiece; laser cutting apparatus
- b: Observation direction
- m: Direction,
- n: Direction
- S1: Step
- S2: Step
- S3: Step
- S4: Step
- S5: Step
- S6: Step
- S7: Step
- S7x: Process parameters where x = a to e
- S7a: Power of the laser source
- S7b: Cutting speed
- S7c: Beam-shaping dynamic movement of the processing laser beam
- S7d: Position of a focal plane of the processing laser beam
- S7e: Chemical composition of the process gas conducted to the process zone
- ST: Setpoint radiation temperature value
- u: Direction
- v: Direction
- w: Direction
- W: Weber number
- x: Direction of the xy-plane, the observation plane
- y: Direction of the xy-plane, the observation plane
- z: Direction of the processing laser beam

## Claims

1. A method for laser cutting a metal workpiece (10), including generating a processing laser beam (114) with a laser source (119) (S1);
directing the processing laser beam in a z-direction onto the workpiece to create a process zone (12) in the workpiece (S2);
moving the processing laser beam (114) and the process zone (12) over the workpiece at a cutting speed to produce a kerf (13), wherein a molten layer (14) is formed in the process zone (S3);
conducting a process gas to the process zone (S4);
the method being **characterised by** the following:
detecting a process light (126) emitted from the process zone (12) and generated in the workpiece by interaction with the processing laser beam (114), and determining the radiation temperature in the process zone using the detected process light (126) (S5);
wherein radiation temperature values of the molten layer (14) from at least one observation direction (b) at an angle of 0° to 80°, preferably 0° to 60°, more preferably 0° to 45°, to the z-direction and projected onto an xy-plane perpendicular to the observation direction (b) are determined spatially resolved (S6); and
at least one of the determined radiation temperature values is regulated to a setpoint radiation temperature value (ST) that corresponds to the respective radiation temperature value in the xy-plane and is spatially resolved in the xy-plane by adapting at least one process parameter (S7a to S7e) of the method (S7);
wherein the at least one process parameter is selected from
- a power of the laser source (S7a);
- the cutting speed (S7b);
- a beam-shaping dynamic movement of the processing laser beam superimposed on the cutting movement (S7c);
- a position of a focal plane of the processing laser beam (S7d); and
- a chemical composition of the process gas conducted to the process zone (S7e).

2. The method according to claim 1,
wherein the process light (126) is detected at an angle of 0° to the z-direction coaxial to the processing laser beam (114); and/or
wherein the temperature of the molten layer (14) is derived from the determined radiation temperature values via the specific emissivity of the molten layer and/or via a dependence of the specific emissivity of the molten layer on the observation direction and/or by quotient formation of several intensities of the process light detected from the same observation direction at different wavelengths.

3. The method according to any one of the preceding claims,
wherein the at least one setpoint radiation temperature value (ST) corresponds to at least one optimised or optimal cutting quality feature; and/or
wherein a Weber number (W) of the molten layer (14) and/or a surface tension of the molten layer and/or a ratio of the surface tension to the density of the molten layer are derived from the at least one determined radiation temperature value and are adjusted by regulating the radiation temperature value in accordance with the optimised or optimal cutting quality feature; and/or
wherein the cutting quality feature, in particular the at least one optimised or optimal cutting quality feature, is selected from drop formation, burr drops, burr beads, burr on the underside of the cut workpiece (10), a burr height on the underside of the cut workpiece (10), scoring on a cut edge (11) of the cut workpiece, a scoring frequency of the scoring on the cut edge and any combination thereof.

4. The method according to any one of the preceding claims,
wherein the beam-shaping dynamic movement of the processing laser beam (114) is set by means of a variation in a movement amplitude of the processing laser beam, in particular in the range of at least ±0.5 mm, preferably at least ±1 mm, and/or a variation in a movement frequency of the processing laser beam, in particular in the range of 0.1 Hz to 17 kHz, preferably 10 Hz to 15 kHz, more preferably 100 Hz to 4 kHz.

5. The method according to any one of the preceding claims,
wherein the chemical composition of the process gas is set by admixing and/or metering at least one gas that contains at least one element or molecule that is surface-active for the molten layer (14), in particular an oxygen-containing gas, a nitrogen-containing gas, a carbon-containing gas and/or a sulphur-containing gas.

6. The method according to any one of the preceding claims,
wherein the at least one setpoint radiation temperature value (ST) is determined by calibrating determined radiation temperature values of the molten layer to at least one optimal cutting quality feature.

7. The method according to any one of the preceding claims,
wherein the determined radiation temperature values are matched to a geometry of the kerf (13).

8. An apparatus (100; 200; 300; 400; 500) for laser cutting a metal workpiece (10), in particular for laser cutting a metal workpiece using a method according to any one of the preceding claims, including
a) a cutting head (110) having
- an exit aperture (112) for the processing laser beam (114) and for a process gas; and
- a light beam optics (116; 117; 118) for guiding the processing laser beam in a z-direction through the exit aperture (112) and for focusing and/or for beam-shaping dynamic movement of the processing laser beam;
b) a laser source (119) for generating the processing laser beam;
c) a movement device (120) for moving the cutting head (110) relative to the workpiece at a cutting speed;
d) at least one process gas source (122) for the process gas;
the apparatus (100, 200, 300, 400, 500) being **characterised by** the following:
e) a detector device (124) for detecting a process light (126) emitted by the process zone, which is generated in the workpiece by interaction with the processing laser beam, and for determining the radiation temperature in the process zone (12) using the detected process light;
wherein the detector device (124) is designed to determine radiation temperature values of a molten layer in the process zone from at least one observation direction (b) at an angle of 0° to 80° to the z-direction and projected onto an xy-plane perpendicular to the observation direction in a spatially resolved manner; and the apparatus also has
f) a regulating device (128) for regulating at least one of the determined radiation temperature values to a setpoint radiation temperature value (ST) that corresponds to the respective radiation temperature value in the xy-plane and is spatially resolved in the xy-plane, by adapting at least one process parameter (S7a to S7e) of the method; wherein the at least one process parameter is selected from
- the power of the laser source (S7a);
- the cutting speed (S7b);
- a beam-shaping dynamic movement of the processing laser beam superimposed on the cutting movement (S7c);
- a position of a focal plane of the processing laser beam (S7d); and
- a chemical composition of the process gas (S7e).

9. The apparatus according to claim 8,
wherein the detector device (124) and/or the light beam optics (116; 117; 118) are designed and/or positioned to detect the process light (126) at an angle of 0° to the z-direction coaxial to the processing laser beam (114); and/or
wherein the detector device (124) is designed to derive the temperature of the molten layer (14) from the determined radiation temperature values via the specific emissivity of the molten layer and/or via a dependence of the specific emissivity of the molten layer on the observation direction and/or by quotient formation of several intensities of the process light detected from the same observation direction at different wavelengths.

10. The apparatus according to one of claims 8 and 9,
wherein a memory unit (129) is provided, which is connected to the regulating device in a data-conducting manner and contains the at least one setpoint radiation temperature value;
and/or wherein the regulating device (128) is designed to derive a Weber number (W) of the molten layer (14) and/or a surface tension of the molten layer and/or a ratio of the surface tension to the density of the molten layer from the at least one determined radiation temperature value and to adjust it in accordance with at least one optimised or optimal cutting quality feature by regulating the radiation temperature value.

11. The apparatus according to any one of claims 8 to 10,
wherein the light beam optics (116; 117; 118) includes a movable optical element (116) which is movable by an element movement unit (117); and/or wherein the regulating device (128) is connected in a data-conducting manner to at least one element selected from the laser source (119), the movement device (120), the process gas source (122), in particular a gas metering device (123) of the process gas source (122), and the detector device (124); and/or
wherein the at least one process gas source (122) provides at least one gas that contains at least one element or molecule that is surface-active for the molten layer (14), in particular an oxygen-containing gas, a nitrogen-containing gas, a carbon containing gas and/or a sulphur-containing gas, and the regulating device is designed to adjust the chemical composition of the process gas by adding and/or metering the at least one gas by means of the process gas source, in particular by means of the gas metering device of the process gas source.

12. The apparatus according to claim 11,
wherein the regulating device (128) is designed to adjust the beam-shaping dynamic movement of the processing laser beam (114) by means of a variation of a movement amplitude of the processing laser beam moved with the movable optical element (116), in particular in the range of at least ±0.5 mm, preferably at least ±1 mm, and/or a variation in a movement frequency of the processing laser beam moved with the movable optical element, in particular in the range from 0.1 Hz to 17 kHz, preferably 10 Hz to 15 kHz, more preferably 100 Hz up to 4 kHz; and/or wherein the regulating device (128) is connected in a data-conducting manner to the element movement unit (117) of the light beam optics (116; 117; 118) for generating the beam-forming dynamic movement of the processing laser beam.

13. The apparatus according to any one of claims 8 to 12, wherein the regulating device (128) is designed to determine the at least one setpoint radiation temperature value (ST) by calibrating determined radiation temperature values of the molten layer (14) to at least one optimal cutting quality feature.

14. The apparatus according to any one of claims 8 to 13, wherein
the regulating device (128) is designed to match the determined radiation temperature values to a geometry of the kerf (13).

15. A computer program product containing one or more program modules, which cause the apparatus (100; 200; 300; 400; 500) according to any one of claims 8 to 14 to carry out the steps of the method according to any one of claims 1 to 7, in particular when the program modules are loaded into a memory unit of the apparatus.

## Patentansprüche

1. Verfahren zum Laserschneiden eines Metallwerkstücks (10), das einschließt Erzeugen eines Bearbeitungslaserstrahls (114) mit einer Laserquelle (119) (S1); Richten des Bearbeitungslaserstrahls in einer z-Richtung auf das Werkstück, um eine Prozesszone (12) in dem Werkstück zu erzeugen (S2);
Bewegen des Bearbeitungslaserstrahls (114) und der Prozesszone (12) mit einer Schnittgeschwindigkeit über das Werkstück, um eine Schnittfuge (13) zu erzeugen, wobei in der Prozesszone eine geschmolzene Schicht (14) gebildet wird (S3);
Leiten eines Prozessgases zu der Prozesszone (S4);
wobei das Verfahren durch Folgendes gekennzeichnet ist:
Erfassen eines aus der Prozesszone (12) emittierten und durch Wechselwirkung mit dem Bearbeitungslaserstrahl (114) in dem Werkstück erzeugten Prozesslichts (126) und
Ermitteln der Strahlungstemperatur in der Prozesszone unter Verwendung des erfassten Prozesslichts (126) (S5);
wobei Strahlungstemperaturwerte der geschmolzenen Schicht (14) aus mindestens einer Beobachtungsrichtung (b) in einem Winkel von 0° bis 80°, vorzugsweise 0° bis 60°,
bevorzugter 0° bis 45°, zur z-Richtung und projiziert auf eine xy-Ebene senkrecht zur Beobachtungsrichtung (b) räumlich aufgelöst ermittelt werden (S6); und
mindestens einer der ermittelten Strahlungstemperaturwerte auf einen dem jeweiligen Strahlungstemperaturwert in der xy-Ebene entsprechenden und in der xy-Ebene räumlich aufgelösten Strahlungstemperatursollwert (ST) geregelt wird, indem mindestens ein Prozessparameter (S7a bis S7e) des Verfahrens angepasst wird (S7);
wobei der mindestens eine Prozessparameter ausgewählt ist aus
- einer Leistung der Laserquelle (S7a);
- der Schnittgeschwindigkeit (S7b);
- einer der Schneidbewegung überlagerten strahlformenden dynamischen Bewegung des Bearbeitungslaserstrahls (S7c);
- einer Position einer Brennebene des Bearbeitungslaserstrahls (S7d); und
- einer chemischen Zusammensetzung des der Prozesszone zugeführten Prozessgases (S7e).

2. Verfahren nach Anspruch 1,
wobei das Prozesslicht (126) in einem Winkel von 0° zu der z-Richtung koaxial zu dem Bearbeitungslaserstrahl (114) erfasst wird; und/oder
wobei die Temperatur der geschmolzenen Schicht (14) aus den ermittelten Strahlungstemperaturwerten über den spezifischen Emissionsgrad der geschmolzenen Schicht und/oder über eine Abhängigkeit des spezifischen Emissionsgrads der geschmolzenen Schicht von der Beobachtungsrichtung und/oder durch Quotientenbildung mehrerer Intensitäten des Prozesslichts abgeleitet wird, die aus der gleichen Beobachtungsrichtung bei unterschiedlichen Wellenlängen erfasst wurden.

3. Verfahren nach einem der vorhergehenden Ansprüche,
wobei der mindestens eine Strahlungstemperatursollwert (ST) mindestens einem optimierten oder optimalen Schnittqualitätsmerkmal entspricht; und/oder wobei eine Weberzahl (W) der geschmolzenen Schicht (14) und/oder eine Oberflächenspannung der geschmolzenen Schicht und/oder ein Verhältnis der Oberflächenspannung zur Dichte der geschmolzenen Schicht aus dem mindestens einen ermittelten Strahlungstemperaturwert abgeleitet und durch Regeln des Strahlungstemperaturwerts gemäß dem optimierten oder optimalen Schnittqualitätsmerkmal eingestellt werden; und/oder
wobei das Schnittqualitätsmerkmal, insbesondere das mindestens eine optimierte oder optimale Schnittqualitätsmerkmal, ausgewählt ist aus Tropfenbildung, Grattropfen, Gratwülsten, Grat an der Unterseite des geschnittenen Werkstücks (10), einer Grathöhe an der Unterseite des geschnittenen Werkstücks (10), einer Riefenbildung an einer Schnittkante (11) des geschnittenen Werkstücks, einer Riefenhäufigkeit der Riefenbildung an der Schnittkante und einer beliebigen Kombination davon.

4. Verfahren nach einem der vorhergehenden Ansprüche,
wobei die strahlformende dynamische Bewegung des Bearbeitungslaserstrahls (114) mittels einer Variation einer Bewegungsamplitude des Bearbeitungslaserstrahls, insbesondere in dem Bereich von mindestens ±0,5 mm, vorzugsweise mindestens ±1 mm, und/oder einer Variation einer Bewegungsfrequenz des Bearbeitungslaserstrahls, insbesondere in dem Bereich von 0,1 Hz bis 17 kHz, vorzugsweise 10 Hz bis 15 kHz, bevorzugter 100 Hz bis 4 kHz, angepasst wird.

5. Verfahren nach einem der vorhergehenden Ansprüche,
wobei die chemische Zusammensetzung des Prozessgases durch Zumischen und/oder Zudosieren mindestens eines Gases angepasst wird, das mindestens ein für die geschmolzene Schicht (14) oberflächenaktives Element oder Molekül enthält, insbesondere eines sauerstoffhaltigen Gases, eines stickstoffhaltigen Gases, eines kohlenstoffhaltigen Gases und/oder eines schwefelhaltigen Gases.

6. Verfahren nach einem der vorhergehenden Ansprüche,
wobei der mindestens eine Strahlungstemperatursollwert (ST) durch Kalibrieren ermittelter Strahlungstemperaturwerte der geschmolzenen Schicht auf mindestens ein optimales Schnittqualitätsmerkmal ermittelt wird.

7. Verfahren nach einem der vorhergehenden Ansprüche,
wobei die ermittelten Strahlungstemperaturwerte an eine Geometrie der Schnittfuge (13) angepasst werden.

8. Vorrichtung (100; 200; 300; 400; 500) zum Laserschneiden eines Metallwerkstücks (10), insbesondere zum Laserschneiden eines Metallwerkstücks unter Verwendung eines Verfahrens nach einem der vorhergehenden Ansprüche, die einschließt
a) einen Schneidkopf (110), der aufweist
- eine Austrittsöffnung (112) für den Bearbeitungslaserstrahl (114) und für ein Prozessgas; und
- eine Lichtstrahloptik (116; 117; 118) zum Führen des Bearbeitungslaserstrahls in einer z-Richtung durch die Austrittsöffnung (112) und zum Fokussieren und/oder zum Strahlformen einer dynamischen Bewegung des Bearbeitungslaserstrahls;
b) eine Laserquelle (119) zum Erzeugen des Bearbeitungslaserstrahls;
c) eine Bewegungseinrichtung (120) zum Bewegen des Schneidkopfs (110) relativ zu dem Werkstück mit einer Schneidgeschwindigkeit;
d) mindestens eine Prozessgasquelle (122) für das Prozessgas;
wobei die Vorrichtung (100, 200, 300, 400, 500) durch Folgendes gekennzeichnet ist:
e) eine Detektoreinrichtung (124) zum Erfassen eines aus der Prozesszone emittierten Prozesslichts (126), das in dem Werkstück durch Wechselwirkung mit dem Bearbeitungslaserstrahl erzeugt wird, und zum Ermitteln der Strahlungstemperatur in der Prozesszone (12) unter Verwendung des erfassten Prozesslichts;
wobei die Detektoreinrichtung (124) ausgelegt ist, um Strahlungstemperaturwerte einer geschmolzenen Schicht in der Prozesszone aus mindestens einer Beobachtungsrichtung (b) in einem Winkel von 0° bis 80° zu der z-Richtung und projiziert auf eine zu der Beobachtungsrichtung senkrechte xy-Ebene räumlich aufgelöst zu ermitteln;
und die Vorrichtung außerdem aufweist
f) eine Regelungseinrichtung (128) zum Regeln mindestens eines der ermittelten Strahlungstemperaturwerte auf einen dem jeweiligen Strahlungstemperaturwert in der xy-Ebene entsprechenden und in der xy-Ebene räumlich aufgelösten Strahlungstemperatursollwert (ST) durch Einstellen mindestens eines Prozessparameters (S7a bis S7e) des Verfahrens;
wobei der mindestens eine Prozessparameter ausgewählt ist aus
- der Leistung der Laserquelle (S7a);
- der Schnittgeschwindigkeit (S7b);
- einer der Schneidbewegung überlagerten strahlformenden dynamischen Bewegung des Bearbeitungslaserstrahls (S7c);
- einer Position einer Brennebene des Bearbeitungslaserstrahls (S7d); und
- einer chemischen Zusammensetzung des Prozessgases (S7e).

9. Vorrichtung nach Anspruch 8,
wobei die Detektoreinrichtung (124) und/oder die Lichtstrahloptik (116; 117; 118) ausgelegt und/oder positioniert sind, um das Prozesslicht (126) in einem Winkel von 0° zu der z-Richtung koaxial zu dem Bearbeitungslaserstrahl (114) zu erfassen; und/oder wobei die Detektoreinrichtung (124) ausgelegt ist, um die Temperatur der geschmolzenen Schicht (14) aus den ermittelten Strahlungstemperaturwerten über den spezifischen Emissionsgrad der geschmolzenen Schicht und/oder über eine Abhängigkeit des spezifischen Emissionsgrads der geschmolzenen Schicht von der Beobachtungsrichtung und/oder durch Quotientenbildung mehrerer erfasster Intensitäten des Prozesslichts abzuleiten, die aus der gleichen Beobachtungsrichtung bei unterschiedlichen Wellenlängen erfasst wurden.

10. Vorrichtung nach einem der Ansprüche 8 und 9,
wobei eine Speichereinheit (129) bereitgestellt ist, die mit der Regelungseinrichtung in einer datenleitenden Weise verbunden ist und den mindestens einen Strahlungstemperatursollwert enthält;
und/oder wobei die Regelungseinrichtung (128) ausgelegt ist, um aus dem mindestens einen ermittelten Strahlungstemperaturwert eine Weberzahl (W) der geschmolzenen Schicht (14) und/oder eine Oberflächenspannung der geschmolzenen Schicht und/oder ein Verhältnis der Oberflächenspannung zur Dichte der geschmolzenen Schicht abzuleiten und diese gemäß mindestens einem optimierten oder optimalen Schnittqualitätsmerkmal durch Regeln des Strahlungstemperaturwerts einzustellen.

11. Vorrichtung nach einem der Ansprüche 8 bis 10,
wobei die Lichtstrahloptik (116; 117; 118) ein bewegliches optisches Element (116) einschließt, das durch eine Elementbewegungseinheit (117) bewegbar ist; und/oder wobei die Regelungseinrichtung (128) in einer datenleitenden Weise mit mindestens einem Element verbunden ist, das ausgewählt ist aus der Laserquelle (119), der Bewegungseinrichtung (120), der Prozessgasquelle (122), insbesondere einer Gasdosiereinrichtung (123) der Prozessgasquelle (122), und der Detektoreinrichtung (124); und/oder
wobei die mindestens eine Prozessgasquelle (122) mindestens ein Gas bereitstellt, das mindestens ein für die geschmolzene Schicht (14) oberflächenaktives Element oder Molekül enthält, insbesondere ein sauerstoffhaltiges Gas, ein stickstoffhaltiges Gas, ein kohlenstoffhaltiges Gas und/oder ein schwefelhaltiges Gas, und die Regelungseinrichtung ausgelegt ist, um die chemische Zusammensetzung des Prozessgases durch Zugeben und/oder Dosieren des mindestens einen Gases mittels der Prozessgasquelle, insbesondere mittels der Gasdosiereinrichtung der Prozessgasquelle, einzustellen.

12. Vorrichtung nach Anspruch 11,
wobei die Regelungseinrichtung (128) ausgelegt ist, um die strahlformende dynamische Bewegung des Bearbeitungslaserstrahls (114) mittels einer Variation einer Bewegungsamplitude des mit dem beweglichen optischen Element (116) bewegten Bearbeitungslaserstrahls insbesondere in dem Bereich von mindestens ±0,5 mm, vorzugsweise mindestens ±1 mm, und/oder einer Variation einer Bewegungsfrequenz des mit dem beweglichen optischen Element bewegten Bearbeitungslaserstrahls insbesondere in dem Bereich von 0,1 Hz bis 17 kHz, vorzugsweise 10 Hz bis 15 kHz, bevorzugter 100 Hz bis zu 4 kHz, einzustellen; und/oder
wobei die Regelungseinrichtung (128) mit der Elementbewegungseinheit (117) der Lichtstrahloptik (116; 117; 118) zum Erzeugen der strahlformenden dynamischen Bewegung des Bearbeitungslaserstrahls in einer datenleitenden Weise verbunden ist.

13. Vorrichtung nach einem der Ansprüche 8 bis 12, wobei die Regelungseinrichtung (128) ausgelegt ist, um den mindestens einen Strahlungstemperatursollwert (ST) durch Kalibrieren ermittelter Strahlungstemperaturwerte der geschmolzenen Schicht (14) auf mindestens ein optimales Schnittqualitätsmerkmal zu ermitteln.

14. Vorrichtung nach einem der Ansprüche 8 bis 13, wobei
die Regelungseinrichtung (128) ausgelegt ist ist, um die ermittelten Strahlungstemperaturwerte an eine Geometrie der Schnittfuge (13) anzupassen.

15. Computerprogrammprodukt, das ein oder mehrere Programmmodule enthält, die die Vorrichtung (100; 200; 300; 400; 500) nach einem der Ansprüche 8 bis 14 veranlassen, die Schritte des Verfahrens nach einem der Ansprüche 1 bis 7 auszuführen, insbesondere wenn die Programmmodule in eine Speichereinheit der Vorrichtung geladen sind.

## Revendications

1. Procédé de découpe laser d'une pièce à usiner (10) métallique, comportant la génération d'un faisceau laser de traitement (114) avec une source laser (119) (S1) ; la direction du faisceau laser de traitement dans une direction z sur la pièce à usiner pour créer une zone de traitement (12) dans la pièce à usiner (S2) ;
le déplacement du faisceau laser de traitement (114) et de la zone de traitement (12) sur la pièce à usiner à une vitesse de découpe pour produire une saignée (13), dans lequel une couche fondue (14) est formée dans la zone de traitement (S3) ;
la conduction d'un gaz de traitement vers la zone de traitement (S4) ;
le procédé étant **caractérisé par** ce qui suit :
la détection d'une lumière de traitement (126) émise par la zone de traitement (12) et générée dans la pièce à usiner par interaction avec le faisceau laser de traitement (114), et la détermination de la température de rayonnement dans la zone de traitement à l'aide de la lumière de traitement (126) détectée (S5) ;
dans lequel des valeurs de température de rayonnement de la couche fondue (14) provenant d'au moins une direction d'observation (b) à un angle de 0° à 80°, de préférence de 0° à 60°, plus préférablement de 0° à 45°, par rapport à la direction z et projetées sur un plan xy perpendiculaire à la direction d'observation (b) sont déterminées en résolution spatiale (S6) ; et
au moins l'une des valeurs de température de rayonnement déterminées est régulée sur une valeur de température de rayonnement de consigne (ST) qui correspond à la valeur de température de rayonnement respective dans le plan xy et est résolue spatialement dans le plan xy en adaptant au moins un paramètre de traitement (S7a à S7e) du procédé (S7) ;
dans lequel l'au moins un paramètre de traitement est sélectionné parmi
- une puissance de la source laser (S7a) ;
- la vitesse de découpe (S7b) ;
- un mouvement dynamique de mise en forme de faisceau du faisceau laser de traitement superposé sur le mouvement de découpe (S7c) ;
- une position d'un plan focal du faisceau laser de traitement (S7d) ; et
- une composition chimique du gaz de traitement conduit vers la zone de traitement (S7e).

2. Procédé selon la revendication 1,
dans lequel la lumière de traitement (126) est détectée à un angle de 0° par rapport à la direction z coaxiale au faisceau laser de traitement (114) ; et/ou
dans lequel la température de la couche fondue (14) est dérivée des valeurs de température de rayonnement déterminées par l'intermédiaire de l'émissivité spécifique de la couche fondue et/ou par l'intermédiaire d'une dépendance de l'émissivité spécifique de la couche fondue à la direction d'observation et/ou par formation en quotient de plusieurs intensités de la lumière de traitement détectée à partir de la même direction d'observation sous différentes longueurs d'onde.

3. Procédé selon l'une quelconque des revendications précédentes,
dans lequel l'au moins une valeur de température de rayonnement de consigne (ST) correspond à au moins une caractéristique de qualité de découpe optimisée ou optimale ; et/ou
dans lequel un nombre de Weber (W) de la couche fondue (14) et/ou une tension superficielle de la couche fondue et/ou un rapport de la tension superficielle à la densité de la couche fondue sont dérivés de l'au moins une valeur de température de rayonnement déterminée et sont ajustés en régulant la valeur de température de rayonnement selon la caractéristique de qualité de découpe optimisée ou optimale ; et/ou
dans lequel la caractéristique de qualité de découpe, en particulier l'au moins une caractéristique de qualité de découpe optimisée ou optimale, est sélectionnée parmi la formation de gouttes, les gouttes de bavures, les perles de bavures, les bavures sur la face inférieure de la pièce à usiner (10) découpée, une hauteur de bavure sur la face inférieure de la pièce à usiner (10) découpée, les entailles sur un bord découpé (11) de la pièce à usiner découpée, une fréquence d'entaille des entailles sur le bord découpé et une quelconque combinaison de celles-ci.

4. Procédé selon l'une quelconque des revendications précédentes,
dans lequel le mouvement dynamique de mise en forme de faisceau du faisceau laser de traitement (114) est défini au moyen d'une variation d'une amplitude de mouvement du faisceau laser de traitement, en particulier dans la plage d'au moins ±0,5 mm, de préférence d'au moins ±1 mm, et/ou d'une variation d'une fréquence de mouvement du faisceau laser de traitement, en particulier dans la plage de 0,1 Hz à 17 kHz, de préférence de 10 Hz à 15 kHz, plus préférablement de 100 Hz à 4 kHz.

5. Procédé selon l'une quelconque des revendications précédentes,
dans lequel la composition chimique du gaz de traitement est définie par mélange et/ou dosage d'au moins un gaz qui contient au moins un élément ou une molécule qui est tensioactif pour la couche fondue (14), en particulier un gaz contenant de l'oxygène, un gaz contenant de l'azote, un gaz contenant du carbone et/ou un gaz contenant du soufre.

6. Procédé selon l'une quelconque des revendications précédentes,
dans lequel l'au moins une valeur de température de rayonnement de consigne (ST) est déterminée en étalonnant des valeurs de température de rayonnement déterminées de la couche fondue sur au moins une caractéristique de qualité de découpe optimale.

7. Procédé selon l'une quelconque des revendications précédentes,
dans lequel les valeurs de température de rayonnement déterminées sont adaptées à une géométrie de la saignée (13).

8. Appareil (100 ; 200 ; 300 ; 400 ; 500) de découpe laser d'une pièce à usiner (10) métallique, en particulier de découpe laser d'une pièce à usiner métallique à l'aide d'un procédé selon l'une quelconque des revendications précédentes, comportant
a) une tête de découpe (110) ayant
- une ouverture de sortie (112) pour le faisceau laser de traitement (114) et pour un gaz de traitement ; et
- une optique de faisceau lumineux (116 ; 117 ; 118) pour guider le faisceau laser de traitement dans une direction z à travers l'ouverture de sortie (112) et pour focaliser et/ou pour mettre en forme de faisceau le mouvement dynamique du faisceau laser de traitement ;
b) une source laser (119) pour générer le faisceau laser de traitement ;
c) un dispositif de déplacement (120) pour déplacer la tête de découpe (110) par rapport à la pièce à usiner selon une vitesse de découpe ;
d) au moins une source de gaz de traitement (122) pour le gaz de traitement ;
l'appareil (100, 200, 300, 400, 500) étant **caractérisé par** ce qui suit :
e) un dispositif détecteur (124) pour détecter une lumière de traitement (126) émise par la zone de traitement, qui est générée dans la pièce à usiner par interaction avec le faisceau laser de traitement, et pour déterminer la température de rayonnement dans la zone de traitement (12) à l'aide de la lumière de traitement détectée ;
dans lequel le dispositif détecteur (124) est conçu pour déterminer des valeurs de température de rayonnement d'une couche fondue dans la zone de traitement à partir d'au moins une direction d'observation (b) à un angle de 0° à 80° par rapport à la direction z et projetées sur un plan xy perpendiculaire à la direction d'observation en mode de résolution spatiale ;
et l'appareil a également
f) un dispositif de régulation (128) pour réguler au moins l'une des valeurs de température de rayonnement déterminées sur une valeur de température de rayonnement de consigne (ST) qui correspond à la valeur de température de rayonnement respective dans le plan xy et est résolue spatialement dans le plan xy, en adaptant au moins un paramètre de traitement (S7a à S7e) du procédé ;
dans lequel l'au moins un paramètre de traitement est sélectionné parmi
- la puissance de la source laser (S7a) ;
- la vitesse de découpe (S7b) ;
- un mouvement dynamique de mise en forme de faisceau du faisceau laser de traitement superposé sur le mouvement de découpe (S7c) ;
- une position d'un plan focal du faisceau laser de traitement (S7d) ; et
- une composition chimique du gaz de traitement (S7e).

9. Appareil selon la revendication 8,
dans lequel le dispositif détecteur (124) et/ou l'optique de faisceau lumineux (116 ; 117 ; 118) sont conçus et/ou positionnés pour détecter la lumière de traitement (126) à un angle de 0° par rapport à la direction z coaxiale au faisceau laser de traitement (114) ; et/ou
dans lequel le dispositif détecteur (124) est conçu pour dériver la température de la couche fondue (14) à partir des valeurs de température de rayonnement déterminées par l'intermédiaire de l'émissivité spécifique de la couche fondue et/ou par l'intermédiaire d'une dépendance de l'émissivité spécifique de la couche fondue à la direction d'observation et/ou par formation en quotient de plusieurs intensités de la lumière de traitement détectée à partir de la même direction d'observation sous différentes longueurs d'onde.

10. Appareil selon l'une des revendications 8 et 9,
dans lequel une unité de mémoire (129) est prévue, laquelle est connectée au dispositif de régulation d'une manière qui soit conductrice de données et contient l'au moins une valeur de température de rayonnement de consigne ;
et/ou dans lequel le dispositif de régulation (128) est conçu pour dériver un nombre de Weber (W) de la couche fondue (14) et/ou une tension superficielle de la couche fondue et/ou un rapport de la tension superficielle à la densité de la couche fondue à partir de l'au moins une valeur de température de rayonnement déterminée et pour l'ajuster selon au moins une caractéristique de qualité de découpe optimisée ou optimale en régulant la valeur de température de rayonnement.

11. Appareil selon l'une quelconque des revendications 8 à 10,
dans lequel l'optique de faisceau lumineux (116 ; 117 ; 118) comporte un élément optique mobile (116) qui est mobile par une unité de déplacement d'élément (117) ; et/ou
dans lequel le dispositif de régulation (128) est connecté d'une manière qui soit conductrice de données à au moins un élément sélectionné parmi la source laser (119), le dispositif de déplacement (120), la source de gaz de traitement (122), en particulier un dispositif de dosage de gaz (123) de la source de gaz de traitement (122), et le dispositif détecteur (124) ; et/ou
dans lequel l'au moins une source de gaz de traitement (122) fournit au moins un gaz qui contient au moins un élément ou une molécule qui est tensioactif pour la couche fondue (14), en particulier un gaz contenant de l'oxygène, un gaz contenant de l'azote, un gaz contenant du carbone et/ou un gaz contenant du soufre, et le dispositif de régulation est conçu pour ajuster la composition chimique du gaz de traitement en ajoutant et/ou en dosant l'au moins un gaz au moyen de la source de gaz de traitement, en particulier au moyen du dispositif de dosage de gaz de la source de gaz de traitement.

12. Appareil selon la revendication 11,
dans lequel le dispositif de régulation (128) est conçu pour ajuster le mouvement dynamique de mise en forme de faisceau du faisceau laser de traitement (114) au moyen d'une variation d'une amplitude de mouvement du faisceau laser de traitement déplacé par l'élément optique mobile (116), en particulier dans une plage d'au moins ±0,5 mm, de préférence d'au moins ±1 mm, et/ou d'une variation d'une fréquence de mouvement du faisceau laser de traitement déplacé par l'élément optique mobile, en particulier dans la plage de 0,1 Hz à 17 kHz, de préférence de 10 Hz à 15 kHz, plus préférablement de 100 Hz jusqu'à 4 kHz ; et/ou
dans lequel le dispositif de régulation (128) est connecté d'une manière qui soit conductrice de données à l'unité de mouvement d'élément (117) de l'optique de faisceau lumineux (116 ; 117 ; 118) pour générer le mouvement dynamique de formation de faisceau du faisceau laser de traitement.

13. Appareil selon l'une quelconque des revendications 8 à 12, dans lequel le dispositif de régulation (128) est conçu pour déterminer l'au moins une valeur de température de rayonnement de consigne (ST) en étalonnant des valeurs de température de rayonnement déterminées de la couche fondue (14) sur au moins une caractéristique de qualité de découpe optimale.

14. Appareil selon l'une quelconque des revendications 8 à 13, dans lequel le dispositif de régulation (128) est conçu pour adapter les valeurs de température de rayonnement déterminées à une géométrie de la saignée (13).

15. Produit de programme d'ordinateur contenant un ou plusieurs modules de programme, qui amènent l'appareil (100 ; 200 ; 300 ; 400 ; 500) selon l'une quelconque des revendications 8 à 14 à réaliser les étapes du procédé selon l'une quelconque des revendications 1 à 7, en particulier lorsque les modules de programme sont chargés dans une unité de mémoire de l'appareil.
